# EUROPÄISCHE PATENTSCHRIFT

(11) **EP 1 288 033 B1**
(45) Veröffentlichungstag und Bekanntmachung des Hinweises auf die Patenterteilung: **20.04.2005**
(21) Anmeldenummer: 02018646.6
(22) Anmeldetag: 20.08.2002
(51) Int. Cl.: B60H 1/24, B60H 1/34

(54) **Kraftfahrzeug mit Luftauslassöffnungen**
Motor vehicle with air outlets
Véhicule automobile avec sorties d'air

(30) Priorität: 24.08.2001 DE 10140700
(43) Veröffentlichungstag der Anmeldung: 05.03.2003
(73) Patentinhaber: SIEMENS AKTIENGESELLSCHAFT, 80333 München (DE)
(72) Erfinder: May, Norbert, 64859 Eppertshausen (DE); Mayer, Klaus, 63179 Obertshausen (DE); Niemeyer, Alexander, 64832 Babenhausen (DE)

(56) Entgegenhaltungen:
- EP-A- 1 080 958
- DE-C- 19 949 038
- US-A- 4 693 416
- US-A- 6 004 203
- PATENT ABSTRACTS OF JAPAN vol. 010, no. 286 (M-521), 27. September 1986 (1986-09-27) & JP 61 105212 A (MAZDA MOTOR CORP), 23. Mai 1986 (1986-05-23)

## Beschreibung

Die Erfindung betrifft ein Kraftfahrzeug mit dem Oberbegriff des Anspruchs 1.

Kraftfahrzeuge der vorstehenden Art sind allgemein bekannt und gebräuchlich. Bei ihnen sind die Luftauslassöffnungen üblicherweise als an bestimmten Stellen positionierte einstellbare Düsen oder als Luftauslassgitter ausgebildet. Solche Luftauslassöffnungen stören oftmals die Optik von Armaturentafeln oder anderen Bauteilen des Kraftfahrzeugs. Sie haben weiterhin den Nachteil, dass im Kraftfahrzeug Zugluft entsteht, weil die Luft nur an wenigen Stellen und deshalb mit beträchtlicher Strömungsgeschwindigkeit austritt.

Bei der Klimatisierung von Räumen bemüht man sich, zur Vermeidung von Zugluft möglichst viele Luftauslassöffnungen und Luftabsaugöffnungen vorzusehen, was jedoch in Kraftfahrzeugen bisher aus Kostengründen nur im begrenzten Maße möglich ist.

Aus der EP 1 080 958 A2 ist eine Vorrichtung zum Belüften des Innenraumes eines Kraftfahrzeuges bekannt. Hierbei weist das Kraftfahrzeug ein Armaturenbrett auf, mit einer im Armaturenbrett angeordneten Austrittsöffnung für einen Luftstrom und mit einer Abdeckung zum Verschließen und Freigeben der Austrittsöffnung, wobei im geöffneten Zustand zwischen dem Rand der Austrittsöffnung und dem Rand der Abdeckung ein Luftspalt ausgebildet ist.

Der Erfindung liegt das Problem zugrunde, ein Kraftfahrzeug der eingangs genannten Art so auszubilden, dass Frischluft, gekühlte Luft oder von der Heizung erwärmte Luft möglichst zugfrei in den Fahrzeuginnenraum einströmen kann, ohne dass hierzu ein hoher Kostenaufwand erforderlich wird.

Dieses Problem wird erfindungsgemäß durch das Kennzeichen des Anspruchs 1 gelöst.

Bei einem solchen Kraftfahrzeug kann man, indem die Fugen um in die Armaturentafel eingesetzte Instrumente herum verlaufen, auf separat ausgebildete Luftauslassöffnungen verzichten und stattdessen ohnehin erforderliche oder zur Verwirklichung der Erfindung geschaffene Fugen für die Innenraumbelüftung verwenden. Dadurch ergeben sich große Luftaustrittsquerschnitte, ohne dass hierzu das Aussehen beispielsweise der Armaturentafel durch eine Vielzahl von Düsen oder Luftauslassgittern unvorteilhaft verändert werden muss. Die großen Luftaustrittsquerschnitte ermöglichen eine zugluftfreie Belüftung des Innenraumes des Kraftfahrzeugs.

Zur weiteren Erhöhung des Gesamtquerschnitts der Luftauslässe trägt es bei, wenn die Fugen an der Außenkontur von in der Armaturentafel angebrachten Einsätzen vorgesehen sind.

Die Erfindung lässt verschiedene Ausführungsformen zu. Zur weiteren Verdeutlichung der Erfindung wird nachfolgend auf die Zeichnung Bezug genommen. Diese zeigt in
- Fig. 1: eine Armaturentafel mit der diese umgebenden Fahrzeugstruktur,
- Fig.2: einen Querschnitt durch einen Teilbereich der Armaturentafel.

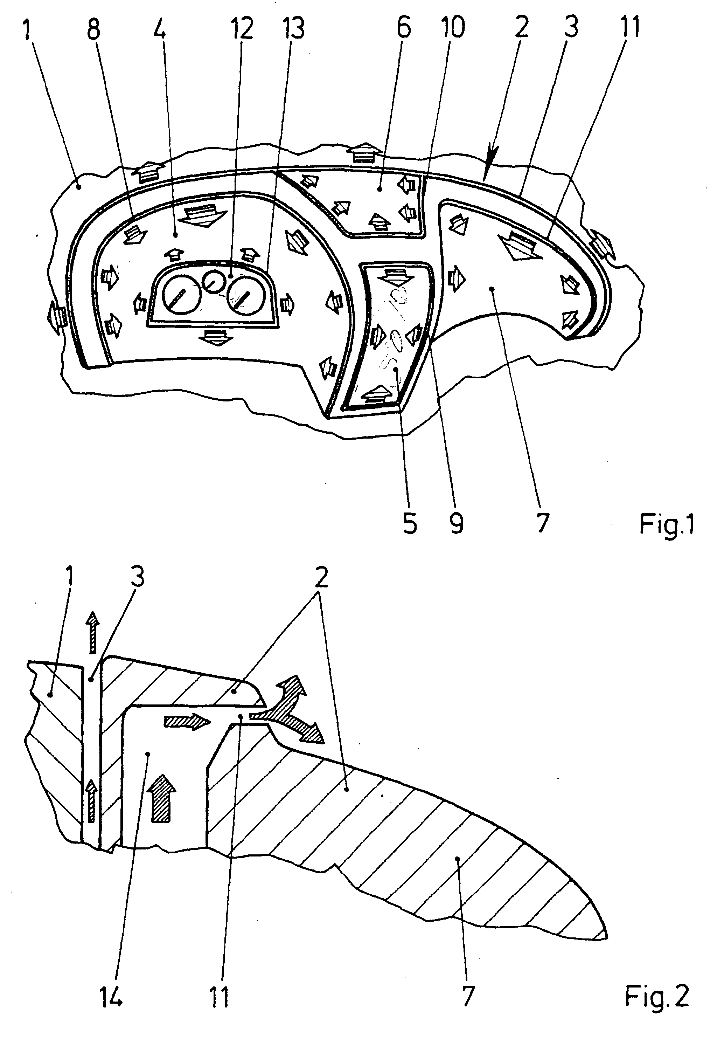

Die Figur 1 zeigt einen Teilbereich einer Fahrzeugstruktur 1, an der eine Armaturentafel 2 befestigt ist. Zwischen dieser Armaturentafel 2 und der Fahrzeugstruktur 1 verbleibt eine Fuge 3, die bewusst so breit ausgebildet ist, dass aus ihr Frischluft oder von der Heizung erwärmte oder einer Klimaanlage gekühlte Luft strömen kann, was durch mehrere Pfeile verdeutlicht wurde.

Die Armaturentafel 1 enthält mehrere Einsätze 4, 5, 6, 7, die entlang ihrer Außenkontur jeweils zur Armaturentafel 1 hin eine Fuge 8 - 11 aufweisen.

Entsprechend ist ein Kombiinstsrument 12 von einer Fuge 13 umgeben.

Wichtig für die Erfindung ist, dass aus allen Fugen 3, 8 - 11, 13 zur zugfreien Belüftung des Fahrzeuginnenraumes Luft zu strömen vermag.

Die Figur 2 zeigt im Maßstab vergrößert einen Schnitt durch einen Teilbereich der Armaturentafel 2 und des Einsatzes 7. Zu erkennen ist, wie der Fuge 11 über einen Kanal 14 Luft zugeführt wird. Weiterhin lässt die Figur 2 erkennen, wie aus der Fuge 3 zwischen der Armaturentafel 2 und der Fahrzeugstruktur 1 Luft zu strömen vermag.

## Patentansprüche

1. Kraftfahrzeug mit in den Fahrzeuginnenraum gerichteten Luftauslassöffnungen zur Innenraumbelüftung, wobei die Luftauslassöffnungen durch zwischen verschiedenen Bauteilen des Kraftfahrzeugs vorhandenen Fugen (3, 8-11, 13) gebildet sind, **dadurch gekennzeichnet, dass** die Fugen (13) um in die Armaturentafel (2) eingesetzte Kombiinstrumente (12) herum verlaufen.

2. Kraftfahrzeug nach Anspruch 1, **dadurch gekennzeichnet, dass** die Fugen (8 - 11) an der Außenkontur von in der Armaturentafel (2) vorgesehenen Einsätzen (4, 5, 6, 7) vorgesehen sind.

## Claims

1. Motor vehicle having air outlet openings directed into the interior of the vehicle for ventilating the interior, the air outlet openings being formed by joints (3, 8-11, 13) present between various components of the motor vehicle, **characterized in that** the joints (13) run around instrument clusters (12) inserted into the dashboard (2).

2. Motor vehicle according to Claim 1, **characterized in that** the joints (8-11) on the outer contour are provided by inserts (4, 5, 6, 7) provided in the dashboard (2).

## Revendications

1. Véhicule automobile comportant, pour l'aération de l'habitacle, des ouvertures de sorties d'air dirigées vers l'habitacle du véhicule, où les ouvertures de sortie d'air sont formées par des fentes (3, 8 - 11, 13) existant entre diverses pièces du véhicule, **caractérisé par le fait que** les fentes (13) se développent tout autour des instruments combinés (12) insérés dans le tableau de bord (2).

2. Véhicule automobile selon la revendication 1 **caractérisé par le fait que** les fentes (8 - 11) sont prévues sur le contour extérieur de pièces (4, 5, 6, 7) prévues dans le tableau de bord (2).
